# EUROPEAN PATENT SPECIFICATION

(11) **EP 0 534 793 B1**
(45) Date of publication and mention of the grant of the patent: **28.02.1996**
(21) Application number: 92308785.2
(22) Date of filing: 25.09.1992
(51) Int. Cl.: H05B 41/29, H02J 9/06

(54) **Emergency lighting apparatus**
Notbeleuchtungsapparat
Appareil d'éclairage de sécurité

(30) Priority: 27.09.1991 GB 9120630
(43) Date of publication of application: 31.03.1993
(73) Proprietor: MENVIER (ELECTRONIC ENGINEERS) LTD., Banbury, Oxon OX16 7RX (GB)
(72) Inventor: Stone, Angus Jonathan Bertram, Banbury, Oxon (GB); Proud, Graham Bernard, Banbury, Oxon (GB)
(74) Representative: Kensett, John Hinton

(56) References cited:
- US-A- 3 900 783
- US-A- 4 727 291
- US-A- 4 751 398
- US-A- 4 866 350

## Description

This invention relates to emergency lighting apparatus. In particular, it relates to lighting apparatus of the gas discharge or fluorescent tube type which is normally operated by a mains supply but which must also continue in operation when the mains supply is temporarily disconnected. Typical uses are emergency exit signs and other emergency luminaires. Where a separate generator is not available for periods of mains interruption, emergency power is generally provided by back up batteries. The batteries are generally charged by a battery charger whilst the mains supply is connected and then used to provide power for the lamp during disconnection of the mains supply.

The devices presently available for emergency lighting use conventional ballasts (ie inductors or inductor circuits) and emergency inverters. However, conventional ballasts are large inductors which can generate considerable amounts of excess heat. This heat can easily damage the batteries after a very short period of operation. Other than accepting a very short battery life, methods of solving the problem to date have included one or more of the following: the battery and/or the emergency gear may be mounted remotely from the fluorescent tube; the luminaire housing can be carefully designed to minimise heat generated within it; or the housing can be adapted such that the heat sources, such as the ballast, and the battery are separated by a heat shield. Heat is generated not only by the ballast but also by the lamp itself, by the battery charger and/or by self-heating of the batteries on overcharge, since, when the battery is fully charged and the charging current remains connected to the battery, the current will be converted to heat rather than stored energy.

Most of the above previous solutions have involved specially designing or modifying a luminaire housing. This can be expensive and is not practical for retro-fitting existing units.

US-A-4,866,350 discloses a mains-only fluorescent lamp system in which an IC chip is used for control logic and power switching. The system does not envisage emergency use including a battery or consider the problems of charging emergency batteries.

US-A-4,727,291 relates to lighting systems having an emergency battery. Battery charging is achieved directly from a mains supply.

US-A-4,751,398 discloses a lighting system having an emergency battery, the battery being charged by a charger direct from a mains AC supply. Feedback means are employed to keep lamp output constant, despite variations in voltage and other factors.

The present invention arose in an attempt to design an improved emergency lighting apparatus and to widen the range of non-emergency fluorescent luminaires that may be converted to provide an emergency lighting facility.

According to the present invention there is provided lighting apparatus comprising a gas discharge lamp, an input for a mains supply, a ballast connected between the mains input and the lamp, and operating at a frequency greater than 20 kHz, a battery, a battery charger for charging the battery from the mains supply, and means for selectively using the battery or the mains supply to power the gas discharge lamp, characterised in that the battery charger operates at a frequency greater than 20 kHz.

Preferably the apparatus comprises a single module.

The apparatus preferably includes means, including a feedback means, for limiting the heat generated within the apparatus.

High Frequency Electronic Ballasts may be used to replace the simple inductor ballast used to control the power drawn by the fluorescent lamp. These dissipate much less power than the standard inductor ballast. They essentially work by acting as a frequency converter, converting the frequency of the standard 50 Hz mains supply (in the UK) to a few tens of thousands of hertz. At the higher frequency a much smaller inductance with far lower resistive and core losses is used to control the lamp power.

Heat rise may alternatively or additionally be limited by using temperature sensing and feedback apparatus, in which the temperature of the lamp or battery or both is sensed and when an overheat condition occurs the power input to the lamp is reduced, within predetermined threshold limits. Such feedback and sensing apparatus (such as thermistors, thermocouples or semiconductor devices) is well known per se, and many examples thereof will be clear to the skilled man in the art. In one embodiment, a simple bimetallic strip may be used. Alternatively, battery voltage may be used to measure battery temperature . Battery voltage can be used as a temperature indicator if the battery characteristic is well understood with respect to state of charge, age, internal resistance, and whether the battery is being charged or discharged. Thus, battery temperature sensing can be carried out without an additional sensor. Temperature controlled components may also be used.

Temperature sensing components may be used to monitor one or more temperature sensitive areas within the luminaire, such as batteries, lamp and air temperature and their output used to control the waveform generated by the frequency converter, so that the power used by the lamp and hence the heat generated by it may be controlled. This may be used to ensure that the temperature of battery, tube or other component does not exceed its optimal or maximum operating temperature. The amount of variation in controlled tube power may be limited so that there is no apparent loss in illumination. This is aided by the fluorescent lamp characteristic of light output decreasing if the optimal temperature is exceeded, in this case decreasing the lamp power would increase, or at least maintain, light output. A further input may be provided to enable external control of light output and give a full range dimming facility.

Battery life may therefore be extended by limitation of this temperature rise. The limitation of the temperature rise allows all of the apparatus to be housed within a luminaire which may be a conventional luminaire housing, or alternatively may be a specially designed housing.

A heat generation reduction technique is to replace the usual 240 volt 50 Hz transformer, used to provide a low voltage battery charging supply (in the UK), with a high frequency transformer with lower core and winding losses. The frequency converter, that usually only drives the lamp, is used to drive this transformer. As with the 50 Hz transformer, the output may drive any form of charger circuit such as a taper charger (simple resistor), semiconductor controlled constant current, semiconductor controlled constant voltage, and dual rate chargers.

In some embodiments the battery charger may be controlled such that when the battery has been fully charged the charge current is reduced, thus reducing the temperature rise caused by overcharge. The means for sensing battery overcharge may include, for example, means for sensing the temperature rise of the battery, means for sensing the flat voltage of the battery changing, timer means adapted to reduce the charge current after a predetermined period from the start of the recharge period, or any combination of these.

When charging nickel-cadmium batteries from a constant current source for example, when the batteries become fully charged their temperature rises, possibly causing them to exceed their maximum rating. A dual rate charger, by either sensing the fully charged state or after charging for a set time period, sufficient to fully charge a completely discharged battery, reduces the charge current to a trickle rate and hence minimise the temperature rise.

The electronic ballast and the battery charger may be integrated into one unit, or formed as a single integrated circuit. This can enable the same component to do both jobs. Indeed, the entire circuit (other than components such as the battery and the lamp) may be configured into a single unit, by applying standard methods of reducing circuit components into semiconductor integrated circuit configurations.

Electronic ballasts or inductor circuits are available and can offer reduced running temperatures and improve performance of the lamps on starting and normal running.

It will be appreciated that by limiting the power to the lamp unit, to limit the temperature rise, the output of the lamp will decrease. However, since the efficiency of gas discharge lamps such as fluorescent lamps reduces if their running temperature gets too high an optimum is achievable. The feedback means may be adapted to keep the lamp running temperature as close, within a predetermined range, to the optimum efficiency as possible.

In apparatus according to the invention the operation of the frequency converter is not reliant upon any load it drives (apart from an overload fault condition, where power from frequency converter may be limited electronically, or the converter turned off completely or in the case of a gross overload a fuse will rupture interrupting the supply to the apparatus). This enables the apparatus to drive any number of lamps, including none, limited only by the power of the frequency converter. Moreover any number of lamps may be removed or fail to strike without affecting the operation of those remaining or the battery charging facility. Lamps powered by the apparatus may be individually or collectively switched on and off by connection and disconnection to the frequency converter via, for example, a relay or solid state device controlled by a standard wall switch or other control device. This arrangement does not significantly interfere with the charging facility.

The frequency converter circuit may include a facility to monitor the mains supply voltage so that it will cease operation if the voltage falls below a limit (eg as specified in a relevant emergency lighting standard), and resume operation when the voltage raises to a limit (specified in the same standard). The emergency lighting facility will sense the resulting cessation of battery charger output and either power a lamp (fluorescent, incandescent, etc) used only for emergency lighting, or power one or more fluorescent lamps previously powered by the frequency converter. When the charger output is resumed, the emergency lighting facility will cease powering any lamp used for emergency lighting only.

In order to comply with regulations it may in some embodiments be necessary to precede the frequency converter with an active power factor correction circuit, particularly when driving higher power or multiple fluorescent lamps.

Filtering may also be provided to limit the imposition of high frequency noise onto the mains supply by the apparatus.

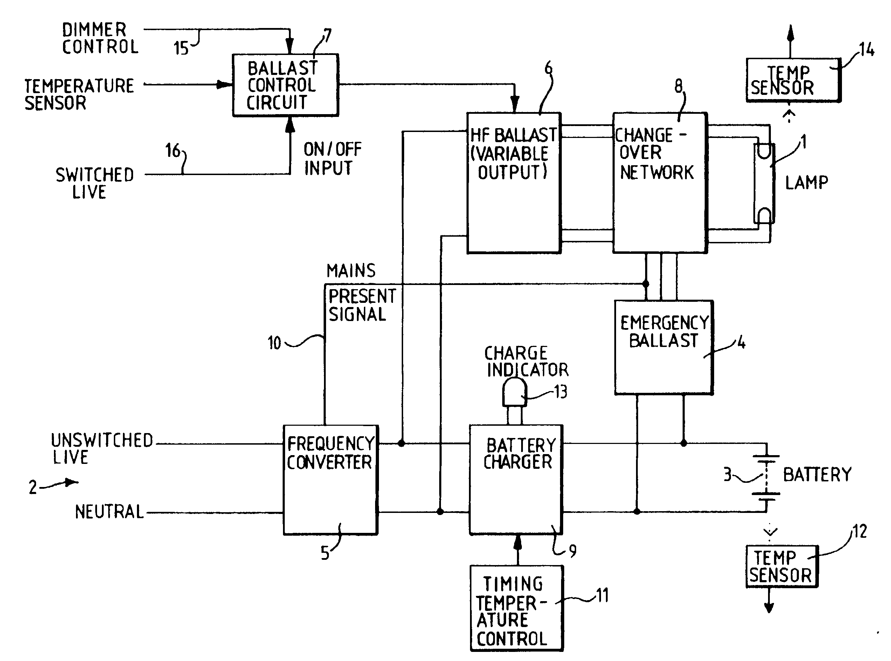

An embodiment of the invention will now be described, by way of example only, with reference to the accompanying drawing which shows schematically an emergency lighting system.

Referring to the Figure, an emergency lighting system comprises a lamp 1 (which will normally be a fluorescent lamp) which may be powered by either a mains supply 2 or by an emergency battery 3 and an emergency ballast 4.

An unswitched live source is applied via a frequency converter 5 to a high frequency electronic ballast 6. In the present example, the frequency converter 5 provides output power at a frequency of 30 kHz. This frequency is not critical but the frequency converter 5 should provide power at a frequency greater than 20 kHz. The ballast 6 has variable output and is controllable by a control circuit 7 having a number of inputs as described below. The outputs from the ballast 6 and from the emergency ballast 4 are applied to a changeover network 8 which can switch between the two so that it can either receive a signal from the mains via the ballast 6 or a signal from the battery via ballast 4. In both cases, power is used to drive the lamp.

A battery charger 9 is connected between the frequency converter 5 and the battery 3 so that, when the lamp is being powered by the mains, the battery charger 9 is actuated by the mains and used to charge up the battery 3. The frequency converter circuit 5 includes a means such as a threshold detector for monitoring the mains supply voltage. If the mains supply voltage falls below the set threshold, then the frequency converter may be adapted to cease operation and to instead generate a mains presence signal on a line 10 to the changeover network 8 to enable the changeover network 8 to receive power from battery 3. Thus, the battery charger will cease powering the battery and instead the battery will be discharged through ballast 4 and changeover network 8 to power lamp 1. The mains voltage continues to be monitored and, as soon as it rises above the threshold, the frequency converter is again brought into operation, power is taken from the mains to the lamp and the battery begins to be charged again by battery charger 9.

The threshold level may be selected by the user, or more probably determined by regulation or safety standards.

It will be appreciated that manual and/or emergency testing apparatus may be included in the system. In one example of this, one or more monitoring elements such as light sensors sensing the output of the lamp or voltage or current sensors sensing output from the mains and/or battery can be connected to a communication circuit so that the operation and condition of the unit can be controlled and monitored from a remote point. Typically, this comprises a central station monitoring a plurality of different emergency lighting units around a building for example. In one example the means connecting each emergency unit with the central station may be a communications bus. It may alternatively be the mains supply using standard mains signalling techniques, a wireless transmission system such as a radio frequency transmission system or an optical fibre. Other methods will be apparent.

It is preferable that the battery charger 9 is controlled so that when the battery has been fully charged or partially charged to a predetermined extent the charge current is reduced or ceased, thus reducing the temperature rise caused by over charge. This is achieved by a timing/temperature control unit 11 which can act to reduce or cease the charging current if necessary. Control unit 11 may receive signals from a battery temperature sensor 12 arranged to sense the temperature of air in the immediate vicinity of the battery or from a battery voltage or impedance sensor (not shown). It may alternatively or additionally include a timing means which reduces the charge current after a predetermined time period from the start of a recharge period. In general, if the type of battery being used is known, it is relatively easy for those skilled in the art to calculate the time required to fully charge a battery after any particular discharge period. The predetermined time period of the timer 11 can be based upon this. The battery charger may be provided with a charge indicator 13 which, in this example, is an LED which illuminates to show that charging is being done. The battery charger may be a dual rate charger.

The temperature of the lamp may also be sensed, for example by a suitably placed temperature sensor 14. An output from the temperature sensor 14 may be applied to the baliast control circuit to reduce the power output from the high frequency ballast and thus to reduce the lamp's temperature. It will be appreciated that other types of feedback could also be used, the fundamental idea being that when an overheat condition is sensed at the lamp the power input to the lamp is reduced, within predetermined threshold limits. The sensing means may be, for example a thermistor, thermocouple or semiconductor device or circuit. Other temperature parameters within or adjacent the luminaire may alternatively or in addition be sensed, such as the battery, as described above, or indeed the air temperature at any point. It will be noted that when the lamp is a fluorescent one, the characteristic of such a lamp is that if the optimal temperature of the lamp is exceeded the light output of the lamp actually decreases. In this case, by decreasing the lamp input power and hence temperature, the light output of the lamp may actually increase, which is clearly advantageous.

An input 15 from a dimmer switch (not shown) may also be applied to control circuit 7 to reduce the power input of the lamp and reduce the light output of the lamp where required.

It will be appreciated that many different methods of reducing temperature within the system may be used. The object of this is to increase battery reliability and duration of battery life whilst allowing the entire system to confined into a small space.

As an alternative to the direct measurement of temperature, it has been described above how battery voltage may alternatively may be sensed. Impedance may also be used and related to temperature. Alternatively, a fuzzy logic means may be applied as part of the feedback system.

The emergency inverter or ballast 4 may in some circumstances be designed such that the power output of the lamp is controlled so that at start-up its light output is maximised and is then controlled to compensate for the fall in battery voltage as the battery is discharged during the full emergency period. This can help to maximise the conversion of useful battery power into light output.

A switched live source 16 may be used as a direct on/off input to ballast control circuit 7.

The ballast control circuit 7, the ballast 6, the change-over network 8, the lamp 1, the emergency ballast 4, the frequency converter 5, the batter charger 9, the battery 3, the time/temperature control 11 and the temperature sensor 12,14 are formed as a single unit. Also, the frequency converter 5, the ballast 6 and the battery charger 9 are formed as a single integrated circuit.

## Claims

1. Lighting apparatus comprising a gas discharge lamp (1), an input for a mains supply (2), a ballast (6) connected between the mains input and the lamp, and operating at a frequency greater than 20 kHz, a battery (3), a battery charger (9) for charging the battery from the mains supply, and means (8) for selectively using the battery or the mains supply to power the gas discharge lamp, characterised in that the battery charger operates at a frequency greater than 20 kHz.

2. Lighting apparatus as claimed in Claim 1, including a common frequency converter (5) for providing output power at a frequency greater than 20 kHz to both the ballast and the battery charger, said common frequency converter receiving input power from the mains supply.

3. Lighting apparatus as claimed in Claim 18, in which the ballast, the battery charger and the frequency converter are formed as a single integrated circuit.

4. Lighting apparatus as claimed in any one of Claims 1 to 3, including means (11,12) for controlling the output of the battery charger in accordance with a parameter related to the state of charge of the battery.

5. Lighting apparatus as claimed in Claim 1 and further including means (12,14,7,11), including a feedback means, for limiting the heat generated within the apparatus.

6. Lighting apparatus as claimed in Claim 5, further comprising means (14) for sensing the temperature of the lamp and feedback means (6,7) for adjusting the power input to the lamp in accordance with the temperature thereof.

7. Lighting apparatus as claimed in any preceding claim, including means (12) for sensing a battery parameter, such as voltage or impedance and feedback means for adjusting the power input to the battery in dependence upon this parameter.

8. Lighting apparatus as claimed in any preceding claim, including means (11) for sensing when the battery is fully charged or partially charged to a predetermined extent and for reducing or ceasing operation of the battery charger under the specified condition.

9. Lighting apparatus as claimed in any preceding claim wherein the apparatus is held in a single luminaire.

10. Lighting apparatus as claimed in any preceding claim, wherein the battery is connected through a means which can vary the output to the lamp, when the battery is powering the lamp, so that light output is maximised at commencement of battery operation and controlled to compensate for the fall in battery voltage as the battery discharges.

11. Lighting apparatus as claimed in any one of the preceding claims, wherein the frequency converter includes means (10) for determining whether a mains signal is present or not and, if not, to configure the apparatus so that power is taken from the battery and to disconnect the battery charger.

12. Lighting apparatus as claimed in any one of the preceding claims, wherein the electronic ballast is controlled by a control circuit (7) having at least one control input (14,15,16).

13. Lighting apparatus as claimed in Claim 12, wherein said at least one control input to the control circuit for the ballast is one or more of an on/off input (16), a dimmer control (15), a battery temperature sensor and/or a temperature sensor (12,14) adapted to sense temperature at a point within or adjacent the luminaire.

14. Lighting apparatus as claimed in Claim 13, in which battery voltage is sensed and used to indicate temperature.

15. Lighting apparatus as claimed in Claim 5, wherein the feedback means includes a fuzzy logic controller.

16. Lighting apparatus as claimed in any preceding claim including control and monitoring apparatus which is remote from the lamp and means for communicating with the remote control apparatus.

17. Lighting apparatus as claimed in Claim 16, wherein the communicating means is a bus, optical fibre means, a wireless link or means for applying signals over a mains power system.

## Patentansprüche

1. Beleuchtungsapparat mit einer Gasentladungslampe (1), einem Anschluß für eine Netzstromversorgung (2), einem in der Schaltung zwischen Netzanschluß und Lampe angeordneten Vorschaltgerät (6), das bei einer über 20 Kilohertz liegenden Frequenz arbeitet, mit einer Batterie (3), einem Batterieladegerät (9), um die Batterie aus der Netzstromversorgung zu laden, und mit Mitteln (8), um wahlweise die Batterie oder die Netzstromversorgung zum Betreiben der Gasentladungslampe zu benutzen, **dadurch gekennzeichnet,** daß das Batterieladegerät bei einer über 20 Kilohertz liegenden Frequenz arbeitet.

2. Beleuchtungsapparat nach Anspruch 1 mit einem gemeinsamen Frequenzwandler (5), um sowohl dem Vorschaltgerät und dem Batterieladegerät eine Ausgangsleistung bei einer Frequenz, die größer als 20 Kilohertz ist, zu liefern, wobei der gemeinsame Frequenzwandler die Eingangsleistung aus der Netzstromversorgung erhält.

3. Beleuchtungsapparat nach Anspruch 18, bei dem das Vorschaltgerät, das Batterieladegerät und der Frequenzwandler von einem einzigen integrierten Schaltkreis gebildet sind.

4. Beleuchtungsapparat nach einem der Ansprüche 1 bis 3, mit Mitteln (11, 12), um die Ausgangsleistung des Batterieladegeräts bezüglich eines im Zusammenhang mit dem Ladezustand der Batterie stehenden Parameters zu überwachen.

5. Beleuchtungsapparat nach Anspruch 1, der ferner Mittel (12, 14, 7, 11) einschließlich einem Rückkoppelmittel aufweist, um die innerhalb des Apparats erzeugte Wärme zu begrenzen.

6. Beleuchtungsapparat nach Anspruch 5, der ferner Mittel (14) zur Bestimmung der Lampentemperatur und Rückkoppelmittel (6, 7) aufweist, um die Eingangsleistung der Lampe entsprechend ihrer Temperatur einzustellen.

7. Beleuchtungsapparat nach einem der vorstehenden Ansprüche mit Mitteln (12) zum Messen eines Batterieparameters, beispielsweise der Spannung oder des Widerstands, und mit Rückkoppelmitteln, um die Eingangsleistung der Batterie in Abhängigkeit von diesem Parameter einzustellen.

8. Beleuchtungsapparat nach einem der vorstehenden Ansprüche mit Mitteln (11), um festzustellen, wann die Batterie voll aufgeladen oder bis auf ein bestimmtes Maß teilweise geladen ist, und um den Betrieb des Batterieladegeräts unter bestimmten Bedingungen einzuschränken oder einzustellen.

9. Beleuchtungsapparat nach einem der vorstehenden Ansprüche, bei dem der Apparat in einem einzigen Leuchtkörper enthalten ist.

10. Beleuchtungsapparat nach einem der vorstehenden Ansprüche, bei dem die Batterie an Mittel angeschlossen ist, mit denen die Leistungsabgabe an die Lampe veränderbar ist, wenn die Batterie die Lampe betreibt, so daß die Lichtausbeute zu Beginn des Batteriebetriebs maximiert und so gesteuert ist, daß der Abfall der Batteriespannung während der Batterieentladung kompensiert ist.

11. Beleuchtungsapparat nach einem der vorstehenden Ansprüche, bei dem der Frequenzwandler Mittel (10) umfaßt, um festzustellen, ob ein Netzsignal vorhanden ist oder nicht, und um, falls das Netzsignal nicht vorhanden ist, den Apparat so einzustellen, daß die Leistung der Batterie entnommen ist und das Batterieladegerät abgetrennt ist.

12. Beleuchtungsapparat nach einem der vorstehenden Ansprüche, bei dem das elektronische Vorschaltgerät durch eine Steuerschaltung (7) gesteuert ist, die über wenigstens einen Steuereingang (14, 15, 16) verfügt.

13. Beleuchtungsapparat nach Anspruch 12, bei dem der wenigstens einmal vorhandene Steuereingang zur Steuerschaltung für das Vorschaltgerät einen oder mehrere An-/Ausschalteingänge (16), einen Dämmerschaltereingang (15), einen Meßeingang für die Batterietemperatur und/oder einen Eingang für einen Temperaturfühler (12, 14), der dazu eingerichtet ist, die Temperatur an einer Stelle innerhalb oder in der Nähe des Leuchtkörpers zu messen, umfaßt.

14. Beleuchtungsapparat nach Anspruch 13, bei dem die Batteriespannung gemessen und zur Bestimmung der Temperatur verwendet ist.

15. Beleuchtungsapparat nach Anspruch 5, bei dem das Rückkoppelmittel einen Fuzzy-Logik-Regler umfaßt.

16. Beleuchtungsapparat nach einem der vorstehenden Ansprüche, der eine Steuer- und Überwachungseinrichtung, die sich im Abstand zur Lampe befindet, und Mittel für eine datentechnische Verbindung mit der entfernten Steuereinrichtung umfaßt.

17. Beleuchtungsapparat nach Anspruch 16, bei dem die datentechnischen Verbindungsmittel von einem Bus, optischen Fasermitteln, einer drahtlosen Verbindung oder Mitteln, um Signale über eine Netzstromeinrichtung zu übermitteln, gebildet sind.

## Revendications

1. Appareil d'éclairage comprenant une lampe à décharge (1), une entrée destinée à une alimentation secteur (2), un circuit d'amorçage (6) connecté entre l'entrée secteur et la lampe, et fonctionnant à une fréquence supérieure à 20kHz, une batterie (3), un chargeur de batterie (9) destiné à charger la batterie à partir de l'alimentation secteur, et un moyen (8) permettant d'utiliser de façon sélective la batterie ou l'alimentation secteur pour alimenter la lampe à décharge, caractérisé en ce que le chargeur de batterie fonctionne à une fréquence supérieure à 20kHz.

2. Appareil d'éclairage selon la revendication 1, comprenant un convertisseur de fréquence commun (5) destiné à procurer une alimentation en sortie à une fréquence supérieure à 20kHz à la fois au circuit d'amorçage et au chargeur de batterie, ledit convertisseur de fréquence commun recevant l'alimentation en entrée depuis l'alimentation secteur.

3. Appareil d'éclairage selon la revendication 1, dans lequel le circuit d'amorçage, le chargeur de batterie et le convertisseur de fréquence sont réalisés sous la forme d'un unique circuit intégré.

4. Appareil d'éclairage selon l'une quelconque des revendications 1 à 3, comprenant des moyens (11, 12) pour commander la sortie du chargeur de batterie conformément à un paramètre lié à l'état de charge de la batterie.

5. Appareil d'éclairage selon la revendication 1, comprenant en outre des moyens (12, 14, 7, 11) incluant un moyen de rétroaction, afin de limiter la chaleur générée à l'intérieur de l'appareil.

6. Appareil d'éclairage selon la revendication 5, comprenant en outre un moyen (14) destiné à détecter la température de la lampe, et un moyen de rétroaction (6, 7) destiné à régler l'entrée d'alimentation vers la lampe conformément à la température de celle-ci.

7. Appareil d'éclairage selon l'une des revendications précédentes, comprenant un moyen (12) pour détecter un paramètre de batterie, tel que la tension ou l'impédance, et un moyen de rétroaction destiné à régler l'alimentation en entrée vers la batterie en fonction de ce paramètre.

8. Appareil d'éclairage selon l'une des revendications précédentes, comprenant un moyen (11) pour détecter le moment où la batterie est complètement chargée ou partiellement chargée jusqu'à une valeur prédéterminée, et pour réduire ou arrêter le fonctionnement du chargeur de batterie sous la condition spécifiée.

9. Appareil d'éclairage selon l'une des revendications précédentes, dans lequel l'appareil est contenu dans un unique luminaire.

10. Appareil d'éclairage selon l'une des revendications précédentes, dans lequel la batterie est connectée par l'intermédiaire d'un moyen qui peut modifier la puissance envoyée à la lampe, lorsque la batterie alimente la lampe, de telle sorte que la puissance lumineuse soit maximisée au début du fonctionnement de la batterie, et commandée de façon à compenser la chute de tension de batterie au fur et à mesure que la batterie se décharge.

11. Appareil d'éclairage selon l'une quelconque des revendications précédentes, dans lequel le convertisseur de fréquence comprend un moyen (10) pour déterminer si un signal de secteur est présent ou non et, si ce n'est pas le cas, configurer l'appareil de façon à ce que l'alimentation soit prise à partir de la batterie tout en déconnectant le chargeur de batterie.

12. Appareil d'éclairage selon l'une quelconque des revendications précédentes, dans lequel le circuit d'amorçage électronique est commandé par un circuit de commande (7) comportant au moins une entrée de commande (14, 15, 16).

13. Appareil d'éclairage selon la revendication 12, dans lequel ladite au moins une entrée de commande vers le circuit de commande destiné au circuit d'amorçage est l'une ou plus parmi une entrée marche/arrêt (16), une commande de gradateur de lumière (15), un capteur de température de batterie et/ou un capteur de température (12, 14) adapté pour capter la température à un point situé à l'intérieur ou à proximité du luminaire.

14. Appareil d'éclairage selon la revendication 13, dans lequel la tension de batterie est détectée et utilisée pour indiquer la température.

15. Appareil d'éclairage selon la revendication 5, dans lequel le moyen de rétroaction comprend un contrôleur à logique floue.

16. Appareil d'éclairage selon l'une des revendications précédentes, comprenant un appareil de commande et de surveillance éloigné de la lampe, et un moyen destiné à communiquer avec l'appareil de commande à distance.

17. Appareil d'éclairage selon la revendication 16, dans lequel le moyen de communication est un bus, un moyen de fibre optique, une liaison sans fil, ou un moyen destiné à appliquer des signaux sur un système d'alimentation secteur.
